# EUROPÄISCHE PATENTANMELDUNG

(11) **EP 2 965 599 A1**
(43) Veröffentlichungstag der Anmeldung: **13.01.2016**
(21) Anmeldenummer: 15401066.4
(22) Anmeldetag: 06.07.2015
(51) Int. Cl.: A01B 21/08, A01B 63/32

(54) **BODENBEARBEITUNGSVORRICHTUNG**

(30) Priorität: 08.07.2014 DE 102014109504
(71) Anmelder: Amazonen-Werke H. Dreyer GmbH & Co. KG, 49205 Hasbergen (DE)
(72) Erfinder: Schwope, Reinhard, 06258 Schkopau / OT Wallendorf (DE); Andrich, Robert, 04177 Leipzig (DE)

(57) **Zusammenfassung**

Bodenbearbeitungsvorrichtung, die einen Tragrahmen mit vorzugsweise zwei daran beabstandet hintereinander im Wesentlichen horizontal und quer zur Fahrtrichtung ausgerichtete Trägerbalken 9 mit daran befestigten und in Richtung des Bodens sich erstreckenden Tragarmen 11 , an deren unteren Enden jeweils Bodenbearbeitungswerkzeuge 13 befestigt sind, aufweist, wobei die Trägerbalken mittels Gelenkanordnungen 10, deren Schwenkachsen zumindest annähernd parallel zur Längsrichtung der Trägerbalken verlaufen, im begrenzten Umfang um die zugeordnete Schwenkachse zur Einstellung der Tragarme 11 und der daran befestigten Bodenbearbeitungswerkzeuge verdrehbar und/oder gemeinsam über eine gekoppelte Schwenkvorrichtung 15, die zwischen dem Tragrahmen und an dem Trägerbalken drehfest angeordneten Schwenkhebeln 14 angeordnet ist, in begrenzter Weise verschwenkbar und/oder verdrehbar sind. Um eine variabel anzuordnende und entsprechend ausgestaltete Schwenkvorrichtung zur Einstellung zumindest zweier miteinander gekoppelter Trägerbalken zu schaffen, ist vorgesehen, dass jedem Trägerbalken 9 zumindest ein als Hydraulikzylinder 15 ausgebildeten Schwenkvorrichtung zugeordnet ist, und dass die Hydraulikzylinder der vorderen und hinteren Trägerbalken über zumindest eine hydraulische Verbindungsleitung miteinander in Art einer Reihenschaltung verbunden sind.

## Beschreibung

Die Erfindung betrifft eine Bodenbearbeitungsvorrichtung gemäß des Oberbegriffes des Patentanspruches 1.

Eine derartige Bodenbearbeitungsvorrichtung ist in DE 100 66 183 B4 beschrieben. Diese Bodenbearbeitungsvorrichtung weist einen Tragrahmen mit vorzugsweise zwei daran beabstandet hintereinander im Wesentlichen horizontal und quer zur Fahrtrichtung ausgerichteten Trägerbalken mit daran befestigten und in Richtung des Bodens sich erstreckenden Tragarmen, an deren unteren Enden jeweils Bodenbearbeitungswerkzeuge befestigt sind, auf. Die Trägerbalken sind mittels Gelenkanordnungen, deren Schwenkachsen zumindest annähernd parallel zur Längsrichtung der Trägerbalken verlaufen, im begrenzten Umfang um die zugeordnete Schwenkachse zur Einstellung der Tragarme und der daran befestigten Bodenbearbeitungswerkzeuge verdrehbar und/oder gemeinsam über eine gekoppelte Schwenkvorrichtung, die zwischen dem Tragrahmen und an dem Trägerbalken drehfest angeordneten Schwenkhebeln angeordnet ist, in begrenzter Weise verschwenkbar und/oder verdrehbar. Die gekoppelte Schwenkvorrichtung besteht aus einer mechanischen Koppelstange, welche über Gelenkverbindungen mit drehfest an den Trägerbalken angeordneten Verstellhebeln gelenkig verbunden ist. Um diese Koppelstange durch den Tragrahmen zuführen, muss die Koppelstange teilweise komplizierte Ausgestaltungen aufweisen oder der Tragrahmen muss entsprechend ausgeführte Freiräume zur Durchführung der Koppelstange aufweisen.

Der Erfindung liegt die Aufgabe zu Grunde, eine variabel anzuordnende und entsprechend ausgestaltete Schwenkvorrichtung zur Einstellung zumindest zweier miteinander gekoppelter Trägerbalken zu schaffen.

Diese Aufgabe der erfindungsgemäß dadurch gelöst, dass jedem Trägerbalken zumindest eine als Hydraulikzylinder ausgebildete Schwenkvorrichtung zugeordnet ist, und dass die Hydraulikzylinder dem vorderen und hinteren Trägerbalken über zumindest eine hydraulische Verbindungsleitung miteinander in Art einer Reihenschaltung verbunden sind.

Infolge dieser Maßnahme wird eine flexibel ausgestaltete und entsprechend den jeweiligen Platzverhältnissen anpassbare Anordnung und Ausgestaltung der Schwenkvorrichtung geschaffen. Darüber hinaus wird in einer mehrreihigen, vorzugsweise zweireihigen Trägerbalkenanordnung eine Tiefeneinstellung und oder Tiefenverstellung die Einstellung nur mit einem zu betätigenden Einstellelement für die Schwenkvorrichtung geschaffen. Die hydraulisch ausgebildete Schwenkvorrichtung lässt sich mit der noch weiter unten im einzelnen beschriebenen Master-Slave-Schaltung vorteilhaft verwirklichen.

Ein einfacher Aufbau der Schwenkvorrichtung lässt sich vom Grundsatz her dadurch verwirklichen, dass zwischen jedem Schwenkhebel eines Trägerbalkens und dem Tragrahmen ein Hydraulikzylinder angeordnet ist.

Um eine optimierte und geschützte Anordnung der Hydraulikzylinder für die Schwenkverrichtung in einfacher Weise bei einer zweireihigen Trägerbalkenanordnung zu schaffen, ist vorgesehen, dass der dem vorderen Trägerbalken zugeordnete Schwenkhebel von dem Trägerbalken in Fahrtrichtung nach vorn ragend angeordnet ist, dass der dem hinteren Trägerbalken zugeordnete Schwenkhebel von dem Trägerbalken entgegen Fahrtrichtung nach hinten ragend angeordnet ist.

Eine einfache Ausgestaltung der Master-Slave-Schaltung lässt sich dadurch erreichen, dass die beiden kolbenbodenseitigen Zylinderräume der dem vorderen und dem hinteren Trägerbalken zugeordneten Hydraulikzylinder mittels einer hydraulischen Verbindungsleitung miteinander verbunden sind, dass an den kolbenringseitigen Zylinderräumen jeweils eine mit einer dem Bodenbearbeitungsgerät zum Betreiben des Bodenbearbeitungsgerätes zugeordneten Hydraulikanlage über hydraulische Verbindungsleitungen verbunden sind.

Weitere Einzelheiten der Erfindung sind der Beispielsbeschreibung zu entnehmen. Die Zeichnungen zeigen
- Fig.1: das als Scheibenegge ausgebildete landwirtschaftliche Gerät in Arbeitsstellung und in perspektivischer Ansicht,
- Fig.2: das als Scheibenegge ausgebildete landwirtschaftliche Gerät in Arbeitsstellung in einer tiefen Arbeitseinstellung in Teilansicht, vergrößertem Maßstab und in Seitenansicht,
- Fig.3: das als Scheibenegge ausgebildete landwirtschaftliche Gerät in Arbeitsstellung in einer tiefen Arbeitseinstellung in der Darstellung nach Fig.2,
- Fig.4: den Hydraulikschaltplan der erfindungsgemäßen Master-Slave-Verschaltung in Prinzipdarstellung und
- Fig.5: einen Hydraulikschaltplan einer Master-Slave-Verschaltung nach dem Stand der Technik in Prinzipdarstellung.

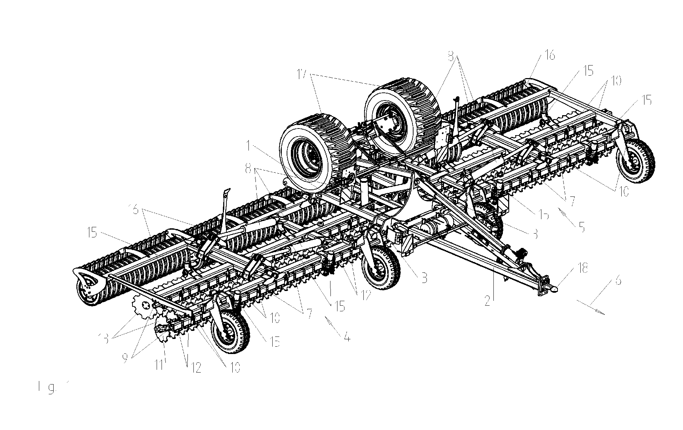

Das als Scheibenegge ausgebildete landwirtschaftliche Gerät weist den Zentralrahmen 1 mit der Zugdeichsel 2 auf. An dem Zentralrahmen 1 sind mittels Gelenken 3 die beiden Seitensektionen 4 und 5 um in Fahrtrichtung 6 verlaufende Schwenkachsen aus der in Fig.1 dargestellten Arbeitsstellung in die nicht dargestellte Transportstellung schwenkbar angeordnet. Die Seitensektionen 4 und 5 weisen die Tragrahmen 7 auf. Zwischen dem Tragrahmen 7 einerseits und dem Zentralrahmen 1 sind andererseits die Hydraulikzylinder 8 zum Verschwenken der Seitensektionen 4 und 5 aus der Arbeitsposition gemäß Fig.1 in die nicht dargestellte Transportposition angeordnet. Die Hydraulikzylinder 8 sind mittels nicht dargestellter Hydraulikleitungen mit einer Hydraulikanlage, beispielsweise eines als Scheibenegge ausgebildete Bodenbearbeitungsgerätes ziehenden Ackerschlepper verbunden. An in dem Tragrahmen 7 sind zwei hintereinander und zumindest annähernd parallel zueinander angeordnete quer zur Bewegungsrichtung 6 der Scheibenegge verlaufende Trägerbalken 9 mittels der Drehlager 10 angeordnet. An jedem Trägerbalken 9 ist eine Vielzahl von Armen 11 mittels einer so genannten Gummilagerung 12 federnd gelagert angeordnet. Somit ist eine elastische Anordnung und Lagerung 12 der Arme 11 an den Trägerbalken 9 geschaffen. An dem der Gummilagerung 12 entgegengesetzten Ende der Arme 11 sind schräg zur Fahrtrichtung 6 angestellte Scheiben 13 zur Bodenbearbeitung in bekannter und nicht näher dargestellter Weise frei drehbar gelagert. Die Scheiben 13 in der vorderen Querreihe sind entgegengesetzt schräg zu den Scheiben 13 in der hinteren Querreihe angestellt.

Mittels der Drehlager 10 sind die Trägerbalken 9 in den Drehlagern 10 um Ihre Längsachse begrenzt verdrehbar angeordnet. Hierzu ist an jeden Trägerbalken 9 zumindest ein drehfest mit ihnen verbundener Schwenkhebel 14 angeordnet. Zwischen den Schwenkhebeln 14 und dem Tragrahmen 7 sind hierzu als hydraulische Schwenkzylinder 15 ausgebildete Verstellmittel zum Verdrehen der Trägerbalken 9 in den Drehlagern 10 mit den über die Arme 11 daran angeordneten Bodenbearbeitungswerkzeugen 13 angeordnet.

Hinter den als den Boden lockernden Bodenbearbeitungswerkzeugen ausgebildeten Scheiben 13 sind Walzenelemente 16 mit entsprechenden Tragarmen in höhenverstellbarer Weise gegenüber den Scheiben 13 zum Verdichten des von den Scheiben 13 gelockerten Bodens in bekannter und daher nicht näher dargestellter und erläuternder Weise angeordnet.

Am hinteren Ende des Zentralrahmens 1 ist das mittels zumindest eines Hydraulikzylinders verschwenkbare Fahrwerk 17 angeordnet. In der in Fig.1 dargestellten Arbeitsstellung des Bodenbearbeitungsgerätes ist das Fahrwerk 16 ausgehoben und befindet sich oberhalb des Zentralrahmens 1 in verschwenkter Weise. Dieses Fahrwerk 17 lässt sich, wenn die Scheibenegge in die nicht dargestellte Transportstellung gebracht wird, in eine Position nach hinten schwenken, so dass die Werkzeuge 13 und 16 des Bodenbearbeitungsgerätes vom Boden abgehoben werden und das Gerät mittels des Fahrwerks 17 entsprechend transportiert werden kann. Auf der Vorderseite der Zugdeichsel 2 befindet sich die Zugkupplung 18, mit welcher das Gerät an eine Zugvorrichtung eines nicht gezeigten Ackerschleppers anzukuppeln ist.

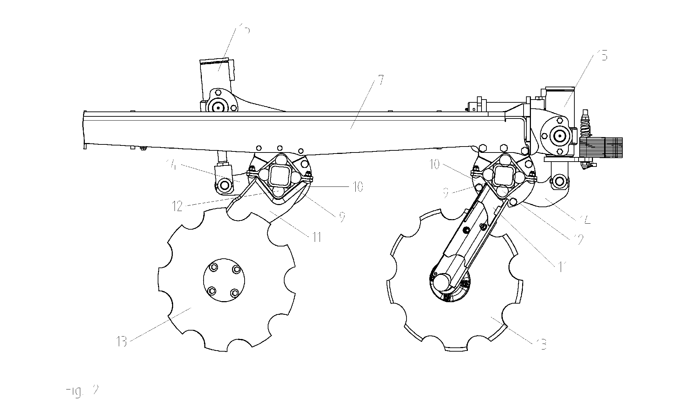

Über die Hydraulikzylinder 15 lassen sich die als Scheiben ausgebildeten Bodenbearbeitungswerkzeuge 13 zwischen den in Fig. 2 für die größtmögliche Arbeitstiefe und der kleinstmöglichen Arbeitstische verstellen.

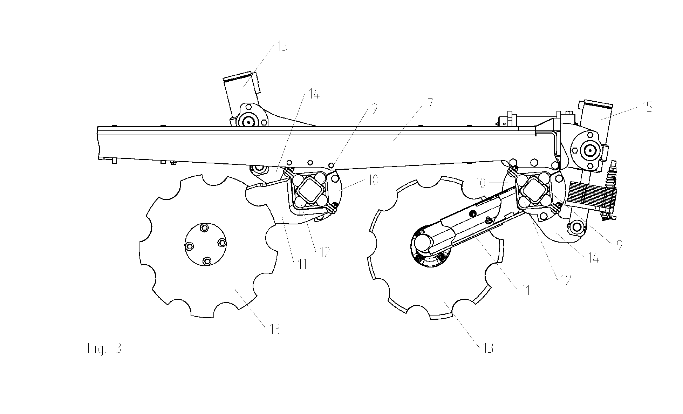

Der dem vorderen Trägerbalken 9 zugeordnete Schwenkhebel 14 ist von dem Trägerbalken in Fahrtrichtung 6 nach vorn ragend angeordnet, wie Fig.2 und 3 zeigen. Der dem hinteren Trägerbalken 9 zugeordnete Schwenkhebel 14 ist von dem Trägerbalken 9 in Fahrtrichtung 6 nach hinten ragend angeordnet, wie Fig.2 und 3 zeigen. Wie bereits zuvor erwähnt sind dann die Hydraulikzylinder 15 zwischen den Trägerbalken 9 abgewandten Seiten der Schwenkhebel 14 und dem Tragrahmen 7 angeordnet.

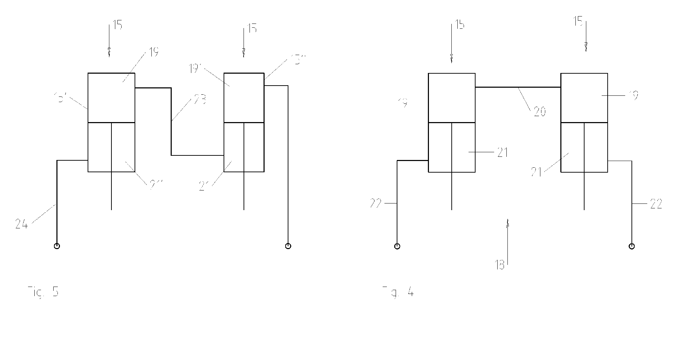

Um die vorderen hinteren Trägerbalken mittels der Hydraulikzylinder 15 in gleicher Weise mit der der vorbeschriebenen Anordnung der Schwenkhebel 14 und der Hydraulikzylinder 15 verschwenken zu können, ist die Hydraulikschaltung 18 für die Hydraulikzylinder 15 entsprechend den in Fig.4 abgebildeten Schaltplan miteinander verschaltet. Der eine Hydraulikzylinder 15 ist dem vorderen Trägerbalken 9 und der andere Hydraulikzylinder 15 ist dem hinteren Trägerbalken 9 zugeordnet. Hierbei ist jedem Trägerbalken 9 zumindest ein als Hydraulikzylinder 15 ausgebildete Schwenkvorrichtung zugeordnet. Hierbei sind die kolbenseitigen Zylinderräume 19 der Hydraulikzylinder 15, die den vorderen und hinteren Trägerbalken 9 zugeordnet sind, über zumindest eine hydraulische Verbindungsleitung 20 in Art einer Reihenschaltung miteinander verbunden, wie Fig.4 zeigt. Somit wird also eine neue erfindungsgemäße Master-Slave-Schaltung geschaffen. Weiterhin sind die an den kolbenringseitigen Zylinderräumen 21 über die hydraulischen Verbindungsleitungen 22 mit einer dem Bodenbearbeitungsgerät zum Betreiben des Bodenbearbeitungsgerätes zugeordneten Hydraulikanlage verbunden. Diese Hydraulikanlage kann die Hydraulikanlage vom das Bodenbearbeitungsgerät ziehenden Schlepper sein. Aufgrund der Verbindung der gleichgroßen Zylinderräume 19 durch die Verbindungsleitung 20 wird ein gleich großer Stellweg der Hydraulikzylinder für eine gleich große Verschwenkung. Der Trägerbalken 9 mit den daran angeordneten Bodenbearbeitungswerkzeugen 13 erreicht. Der vordere Hydraulikzylinder 15, der dem vorderen Trägerbalken 9 zugeordnet ist, ist in einem geschützten Raum vor der ersten Querreihe der Bodenbearbeitungswerkzeuge 13 angeordnet, während der hintere Hydraulikzylinder 15, der dem hinteren Trägerbalken 9 zugeordnet ist, ebenfalls in einem geschützten Raum hinter dem hinteren Trägerbalken 9 und oberhalb der zweiten Querreihe der Bodenbearbeitungswerkzeuge 13 ebenfalls in einem geschützten Raum angeordnet ist. Somit liegen die vorderen und hinteren Hydraulikzylinder 15 nicht in dem von dem Bodenbearbeitungswerkzeugen 13 aufgeworfenen Erdstrom. Aufgrund der entsprechenden Verschaltung der beiden Hydraulikzylinder 15 nach dem Schaltplan 18 gemäß Fig.4 arbeitet bei der jeweiligen Verstellung der eine Hydraulikzylinder 15 als Zugzylinder und der andere Hydraulikzylinder als Druckzylinder.

Die in der Fig.5 gezeigte Hydraulikschaltung zeigt eine Master-Slave-Schaltung nach dem Stand der Technik. Der eine Hydraulikzylinder 15 ist dem vorderen Trägerbalken 9 und der andere Hydraulikzylinder 15 ist dem hinteren Trägerbalken 9 zugeordnet. Bei dieser bekannten Master-Slave-Schaltung sind der eine kolbenbodenseitige Zylinderraum 19 des einen Hydraulikzylinders mit dem einen kolbenringseitigen Zylinderraum 21 des anderen Hydraulikzylinders 15 über eine Verbindungsleitung 23 miteinander verbunden. Weiterhin ist die an dem kolbenringseitigen Zylinderraum 21' des Hydraulikzylinders 15' über eine hydraulische Verbindungsleitung 24 mit einer dem Bodenbearbeitungsgerät zum Betreiben des Bodenbearbeitungsgerätes zugeordneten Hydraulikanlage verbunden und die an dem kolbenbodenseitigen Zylinderraum 19 des anderen Hydraulikzylinders 15" mit einer dem Bodenbearbeitungsgerät zum Betreiben des Bodenbearbeitungsgerätes zugeordneten Hydraulikanlage verbunden. Wenn diese bekannte Master-Slave-Schaltung bei dem vorbeschriebenen Bodenbearbeitungsgerät zum Verstellen der Trägerbalken 9 eingesetzt wird, sind unterschiedlich ausgestaltete Hydraulikzylinder 15', 15" erforderlich, um eine gleichartige Bestellung der beiden Trägerbalken zu erreichen. Außerdem wären zumindest die Hydraulikzylinder der einer Querreihe zugeordneten Bodenbearbeitungswerkzeuge in einem ungeschützten Raum und zumindest teilweise im Erdstrom, der von dem Bodenbearbeitungswerkzeugen aufgeworfen wird, angeordnet.

## Patentansprüche

1. Bodenbearbeitungsvorrichtung, die einen Tragrahmen (7) mit vorzugsweise zwei daran beabstandet hintereinander im Wesentlichen horizontal und quer zur Fahrtrichtung (6) ausgerichtete Trägerbalken (9) mit daran befestigten und in Richtung des Bodens sich erstreckenden Tragarmen (11), an deren unteren Enden jeweils Bodenbearbeitungswerkzeuge (13) befestigt sind, aufweist, wobei die Trägerbalken (9) mittels Gelenkanordnungen (10), deren Schwenkachsen zumindest annähernd parallel zur Längsrichtung der Trägerbalken (9) verlaufen, im begrenzten Umfang um die zugeordnete Schwenkachse zur Einstellung der Tragarme (11) und der daran befestigten Bodenbearbeitungswerkzeuge (13) verdrehbar und/oder gemeinsam über eine gekoppelte Schwenkvorrichtung (15), die zwischen dem Tragrahmen (7) und an dem Trägerbalken (9) drehfest angeordneten Schwenkhebeln (14) angeordnet ist, in begrenzter Weise verschwenkbar und/oder verdrehbar sind, **dadurch gekennzeichnet, dass** jedem Trägerbalken (9) zumindest eine als Hydraulikzylinder (15) ausgebildete Schwenkvorrichtung zugeordnet ist, und dass die Hydraulikzylinder (15) der vorderen und hinteren Trägerbalken (9) über zumindest eine hydraulische Verbindungsleitung (20) miteinander in Art einer Reihenschaltung verbunden sind.

2. Bodenbearbeitungsvorrichtung nach Anspruch 1, **dadurch gekennzeichnet, dass** zwischen jedem Schwenkhebel (14) eines Trägerbalkens (9) und dem Tragrahmen (7) ein Hydraulikzylinder (15) angeordnet ist.

3. Bodenbearbeitungsvorrichtung nach zumindest einem der vorherigen Ansprüche, **dadurch gekennzeichnet, dass** der dem vorderen Trägerbalken (9) zugeordnete Schwenkhebel (14) von dem Trägerbalken (9) in Fahrtrichtung (6) nach vorn ragend angeordnet ist, dass der dem hinteren Trägerbalken (9) zugeordnete Schwenkhebel (14) von dem Trägerbalken (9) entgegen Fahrtrichtung (6) nach hinten ragend angeordnet ist.

4. Bodenbearbeitungsvorrichtung nach zumindest einem der vorherigen Ansprüche, **dadurch gekennzeichnet, dass** die beiden kolbenbodenseitigen Zylinderräume (19) der dem vorderen und dem hinteren Trägerbalken (9) zugeordneten Hydraulikzylinder (15) mittels einer hydraulischen Verbindungsleitung (20) miteinander verbunden sind, dass an den kolbenringseitigen Zylinderräumen (21) jeweils eine mit einer dem Bodenbearbeitungsgerät zum Betreiben des Bodenbearbeitungsgerätes zugeordneten Hydraulikanlage über hydraulische Verbindungsleitungen (23 verbunden sind.
